# EUROPÄISCHE PATENTSCHRIFT

(11) **EP 0 840 900 B1**
(45) Veröffentlichungstag und Bekanntmachung des Hinweises auf die Patenterteilung: **10.11.1999**
(21) Anmeldenummer: 96922766.9
(22) Anmeldetag: 11.07.1996
(51) Int. Cl.: G02B 6/124, G02B 6/136, H01L 21/3063, G02B 5/18

(54) **OPTISCHE STRUKTUR UND VERFAHREN ZU DEREN HERSTELLUNG**
OPTICAL STRUCTURE AND METHOD FOR ITS PRODUCTION
STRUCTURE OPTIQUE ET SON PROCEDE DE FABRICATION

(30) Priorität: 21.07.1995 DE 19526734
(43) Veröffentlichungstag der Anmeldung: 13.05.1998
(73) Patentinhaber: SIEMENS AKTIENGESELLSCHAFT, 80333 München (DE)
(72) Erfinder: GRÜNING, Ulrike, D-80796 München (DE); LEHMANN, Volker, D-80689 München (DE)
(86) Internationale Anmeldenummer: DE9601256
(87) Internationale Veröffentlichungsnummer: WO9704340

(56) Entgegenhaltungen:
- US-A- 5 187 461
- US-A- 5 262 021
- US-A- 5 403 752
- APPLIED PHYSICS LETTERS, Bd. 66, Nr. 24, 12.Juni 1995, WOODBURY,N.Y.,US, Seiten 3254-3256, XP002017882 U.GRÜNING ET.AL.: "Two-dimensional infrared photonic band gap structure based on porous silicon" in der Anmeldung erwähnt
- C.M.SOUKOULIS: "Photonic band gaps and localization" 1993 , PLENUM PRESS , NEW YORK XP002017883 in der Anmeldung erwähnt siehe Seite 207 - Seite 234
- APPLIED PHYSICS LETTERS, Bd. 64, Nr. 6, 7.Februar 1994, Seiten 687-689, XP000422868 GOURLEY P L ET AL: "OPTICAL PROPERTIES OF TWO-DIMENSIONAL PHOTONIC LATTICES FABRICATED AS HONEYCOMB NANOSTRUCTURES IN COMPOUND SEMICONDUCTORS"
- ELECTRONICS LETTERS, Bd. 30, Nr. 17, 18.August 1994, Seiten 1444-1446, XP000476049 KRAUSS T ET AL: "FABRICATION OF 2-D PHOTONIC BANDGAP STRUCTURES IN GAAS/ALGAAS"
- JOURNAL OF APPLIED PHYSICS, Bd. 75, Nr. 9, 1.Mai 1994, Seiten 4753-4755, XP000543576 MEADE R D ET AL: "NOVEL APPLICATIONS OF PHOTONIC BAND GAP MATERIALS: LOW-LOSS BENDS AND HIGH 1 CAVITIES" in der Anmeldung erwähnt

## Beschreibung

In Lichtleitern, wie sie zum Beispiel für die optische Datenübertragung verwendet werden, sowie Kavitäten, wie sie zum Beispiel auf Laserresonatoren verwendet werden, wird die Ausbreitung von Licht in mindestens zwei Raumrichtungen begrenzt. Die Wellenführung erfolgt dabei üblicherweise durch eine Totalreflexion an der Grenzfläche zwischen einem optisch dichteren und einem optisch dünneren Medium. Das Licht breitet sich dabei im optisch dichteren Medium aus.

Neuere wissenschaftliche Arbeiten beschäftigen sich mit der Ausbreitung von Licht in periodischen dielektrischen Gitterstrukturen. Die Ausbreitung von Licht in derartigen Strukturen kann analog zu der Ausbreitung von Elektronen in einem Kristall beschrieben werden. Ist die Wellenlänge des Lichtes in der Größenordnung der Abmessungen des Gitters, so kann sich eine photonische Bandlücke bilden. Die photonische Bandlücke ist ein Frequenzbereich, in dem sich Photonen nicht ausbreiten können. Das heißt, wird auf eine derartige Struktur Licht mit einer Frequenz, die im Frequenzbereich der photonischen Bandlücke liegt, eingestrahlt, so kann sich dieses Licht in der Struktur nicht ausbreiten. Es wird vielmehr an der Oberfläche reflektiert. Dieser Effekt wurde experimentell bestätigt (siehe zum Beispiel E. Yablonovich, "Photonic Band Gaps and Localization", ed. C. M. Soukoulis, Plenum, New York, 1993, Seiten 207 bis 234, oder U. Grüning et al, Appl. Phys. Lett., Bd. 66, Nr. 24, 1995, Seiten 3254 bis 3256). Diese Reflexion wird auch als Braggreflexion am dielektrischen Gitter bezeichnet.

Die experimentellen Untersuchungen wurden an Strukturen durchgeführt, in denen die Gitterstruktur als Schichtaufbau mit alternierenden Schichten mit unterschiedlichem Brechungsindex oder aus einem nichtmetallischen Material wie zum Beispiel AlGaAs oder GaAs oder Si mit in einem periodischen Raster angeordneten Poren realisiert sind. In AlGaAs und GaAs sind diese Poren durch reaktives Ionenätzen hergestellt. Im Silizium sind diese Poren durch elektrochemisches Ätzen hergestellt worden.

Aufgrund theoretischer Überlegungen und Berechnungen ist vorgeschlagen worden, den Effekt der Braggreflexion am dielektrischen Gitter zur Realisierung von Kavitäten und Lichtleitern zu nutzen (siehe zum Beispiel R. Meade et al, J. Appl. Phys., Bd. 75, Nr. 9, 1994, Seite 4753). Für einen Lichtleiter werden dabei zwei Bereiche aus einem Material mit einer photonischen Bandlücke verwendet. Als Material für die photonische Bandlücke ist GaAs mit einer periodischen Lochstruktur vorgeschlagen worden. Zwischen den beiden Bereichen ist als Lichtleiter das Ausgangsmaterial, GaAs, ohne Lochstrukturen angeordnet. In diesem Lichtleiter wird Licht einer Wellenlänge, die einer Frequenz in der photonischen Bandlücke entspricht, in einer Ebene dadurch geführt, daß es sich nicht in das Material mit der photonischen Bandlücke ausbreiten kann. In der Ebene senkrecht dazu wird das Licht durch Totalreflexion an der Grenzfläche des optisch dichteren GaAs zur umgebenden optisch dünneren Atmosphäre geführt. Zur Realisierung einer Kavität wird Material mit einer photonischen Bandlücke zur Begrenzung der Ausbreitung des Lichts in der dritten Raumrichtung vorgesehen.

Ein Verfahren gemäß dem Oberbegriff des Anspruchs 7 ist aus US-A-5 403 752 bekannt.

Der Erfindung liegt das Problem zugrunde, eine weitere optische Struktur anzugeben, die als Lichtleiter oder Kavität geeignet ist und in der die Lichtausbreitung in mindestens einer Raumrichtung durch Braggreflexion an dem dielektrischen Gitter verhindert wird. Weiterhin soll ein Verfahren zur Herstellung einer solchen optischen Struktur angegeben werden.

Dieses Problem wird erfindungsgemäß gelöst durch eine optische Struktur gemäß Anspruch 1 sowie ein Verfahren zu deren Herstellung gemäß Anspruch 7. Weitere Ausgestaltungen der Erfindung gehen aus den übrigen Ansprüchen hervor.

In der erfindungsgemaßen optischen Struktur ist in einem Träger eine Gitterstruktur vorgesehen. Für den Träger ist jedes Material geeignet, das das Licht, mit dem die optische Struktur betrieben werden soll, nicht absorbiert und das nicht metallisch ist. Insbesondere ist der Träger aus einem III-V-Halbleiter oder aus Silizium realisiert.

Die Gitterstruktur weist eine photonische Bandlücke auf, das heißt sie hat die Eigenschaft, daß es mindestens ein Frequenzband gibt, so daß sich Licht mit einer Frequenz aus diesem Frequenzband in der Gitterstruktur nicht ausbreiten kann. Die Gitterstruktur stellt ein dielektrisches Gitter dar, an dem dieses Licht braggreflektiert wird.

Die Gitterstruktur ist durch eine Anordnung von im wesentlichen senkrecht zu einer Hauptflache des Trägers verlaufenden Poren mit im wesentlichen gleichem Querschnitt gebildet. Der Querschnitt der Poren ist vorzugsweise rund. Er kann auch ekkig, zum Beispiel quadratisch sein. Außerhalb eines Defektbereiches in der Gitterstruktur sind die Poren in einem periodischen Raster angeordnet. In dem Defektbereich ist das periodische Raster dagegen gestört. Die Störung kann in einem veränderten Gitterabstand zwischen mindestens zwei Poren, im Fehlen mindestens einer Pore oder in mindestens einer Pore, die mit einem anderen Material gefüllt ist oder einen anderen Durchmesser aufweist, bestehen.

In der Richtung senkrecht zur Hauptfläche weisen die Poren eine Einschnürung auf. Das heißt, es gibt drei übereinander angeordnete, im wesentlichen parallel zur Hauptflache ausgerichtete Bereiche, wobei der Durchmesser der Poren in dem mittleren Bereich kleiner ist als in den beiden äußeren Bereichen. Durch diese Variation des Durchmessers der Poren unterscheidet sich die Dielektrizitätskonstante und damit der Brechungsindex im mittleren Bereich gegenüber der Dielektrizitätskonstante bzw. dem Brechungsindex in den äußeren Bereichen. Der mittlere Bereich ist damit optisch dichter als die äußeren Bereiche. In der Richtung senkrecht zur Hauptfläche wird Licht daher durch Totalreflexion an der Grenzfläche zwischen dem mittleren Bereich und den äußeren Bereichen geführt. Senkrecht dazu wird das Licht dadurch geführt, daß es sich aufgrund seiner Wellenlänge nicht in die Gitterstruktur ausbreiten kann, da die Gitterstruktur für diese Wellenlänge eine photonische Bandlücke aufweist. In der erfindungsgemäßen optischen Struktur wird das Licht im Träger unterhalb der Hauptfläche geführt.

Die Form des Lichtleiters oder die Kavität wird über die geometrische Form des Defektbereichs bestimmt. Eine Kavität wird dadurch gebildet, daß der Defektbereich in zwei Richtungen der Hauptfläche durch die Gitterstruktur begrenzt wird. Für einen Lichtleiter ist der Defektbereich weiter ausgedehnt, so daß die Gitterstruktur in zwei Teile unterteilt wird. Der Lichtleiter kann dabei gerade verlaufen oder Winkel aufweisen.

Über die Abmessung des Defektbereichs senkrecht zur Ausbreitung des Lichtes läßt sich das in dem Defektbereich geführte Licht bezüglich seiner Wellenlänge und/oder Mode fein abstimmen. Je schmaler der Defektbereich ist, desto schärfer ist die Auswahl des geführten Lichtes bezüglich Frequenz und Mode.

Es liegt im Rahmen der Erfindung, daß die Poren in dem Träger mehr als eine Einschnürung aufweisen. Damit werden zwei oder mehr Lichtleiter oder Kavitäten, die übereinander verlaufen, realisiert.

Über die Form des periodischen Rasters lassen sich weitere Eigenschaften der optischen Struktur einstellen. Ist das periodische Raster quadratisch, so ist die optische Struktur zur Lichtführung von polarisiertem Licht geeignet. In diesem Fall kommt es zur Ausbildung von photonischen Bandlücken für die beiden Polarisationsrichtungen des Lichtes, die sich nicht überlappen. Ist das Raster dagegen trigonal, so überlappen die photonischen Bandlücken für beide Polarisationsrichtungen des Lichtes und die optische Struktur ist zur Wellenführung von unpolarisiertem Licht geeignet.

Die optische Struktur kann durch Aufeinanderstapeln unterschiedlich strukturierter Schichten hergestellt werden. Sie kann ferner durch anisotropes Ätzen in einem Substrat, wobei das Ätzen von zwei gegenüberliegenden Flächen erfolgt, gebildet werden. Der eingeschnürte Bereich wird zum Beispiel unter Verwendung einer Spacertechnik realisiert.

Vorzugsweise wird die optische Struktur auf der Basis von n-dotiertem Silizium durch elektrochemisches Ätzen hergestellt. Dabei werden zunächst in einer Hauptfläche eines n-dotierten Siliziumsubstrates in einem periodischen Raster angeordnete Vertiefungen erzeugt. Das Raster weist dabei einen Defektbereich auf, in dem mindestens eine Vertiefung fehlt. Die elektrochemische Ätzung wird in einem Elektrolyten durchgeführt, der vorzugsweise fluoridhaltig und sauer ist und mit dem die Hauptfläche in Kontakt steht. Zwischen den Elektrolyten und das Siliziumsubstrat wird eine Spannung angelegt, so daß das Siliziumsubstrat als Anode verschaltet ist. Dadurch bewegen sich Minoritätsladungsträger in dem n-dotierten Silizium zu der mit dem Elektrolyten in Kontakt stehenden Hauptfläche. An dieser Hauptfläche bildet sich eine Raumladungszone aus. Da die Feldstärke im Bereich von Vertiefungen in der Hauptfläche größer ist als außerhalb davon, bewegen sich die Minoritätsladungsträger bevorzugt zu diesen Punkten. Dadurch kommt es zu einer selbstjustierten Strukturierung der Oberfläche. Je tiefer an anfänglich kleine Vertiefung durch die Ätzung wird, desto mehr Minoritätsladungsträger bewegen sich wegen der vergrößerten Feldstärke dorthin und desto stärker ist der Ätzangriff an dieser Stelle. Die Poren wachsen mit zunehmender Ätzzeit.

Der Ätzangriff ist abhängig von der Stromdichte in dem Siliziumsubstrat. Durch Erhöhung der Stromdichte im Elektrolyten wird der Ätzangriff und damit der Querschnitt der Pore vergrößert. In dem erfindungsgemäßen Verfahren wird die Ätzung in mindestens drei Ätzschritten durchgeführt. Im ersten Ätzschritt wird mit einem ersten Wert für die Stromdichte geätzt, in einem zweiten Ätzschritt mit einem zweiten Wert für die Stromdichte und in einem dritten Ätzschritt mit einem dritten Wert für die Stromdichte geätzt. Dabei ist der zweite Wert für die Stromdichte im zweiten Ätzschritt geringer als der erste Wert für die Stromdichte im ersten Ätzschritt und der dritte Wert für die Stromdichte im dritten Ätzschritt. Dadurch werden die Poren mit einer Einschnürung gebildet. Die Einschnürung wird durch den geringeren, zweiten Wert für die Stromdichte bewirkt.

Zur Herstellung der optischen Struktur mit Poren, die zwei oder mehr Einschnürungen aufweisen, wird die elektrochemische Ätzung entsprechend in fünf oder mehr Ätzschritten durchgeführt.

Im folgenden wird die Erfindung anhand von Ausführungsbeispielen und der Figuren näher erläutert.
- Figur 1: zeigt eine Aufsicht auf eine optische Struktur mit einem Lichtleiter.
- Figur 2: zeigt den in Figur 1 mit II-II bezeichneten Schnitt durch die optische Struktur mit dem Lichtleiter.
- Figur 3: zeigt eine Aufsicht auf eine optische Struktur mit mindestens einer Kavität.
- Figur 4: zeigt den in Figur 3 mit IV-IV bezeichneten Schnitt durch die optische Struktur, wobei die Poren zwei Einschnürungen aufweisen.

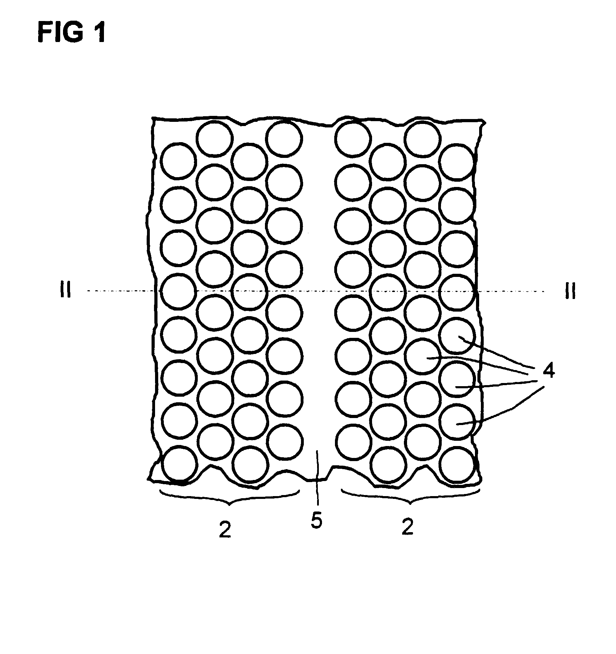

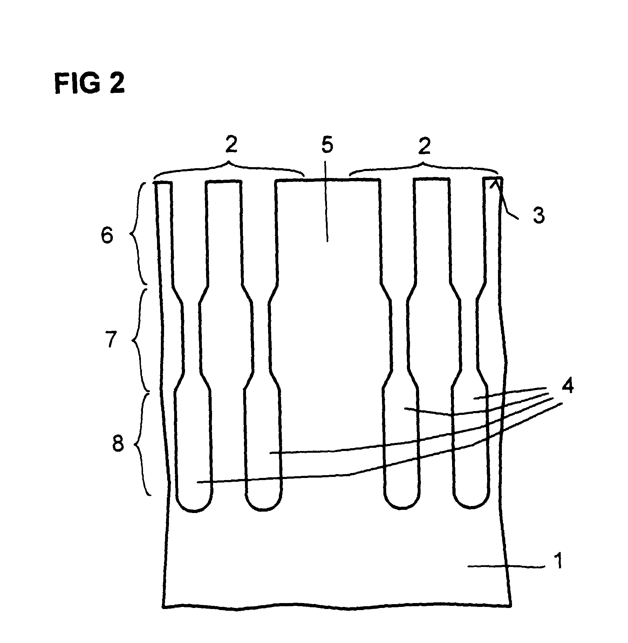

Ein Träger 1 aus n-dotiertem, monokristallinem Silizium umfaßt eine Gitterstruktur 2 (siehe Figur 1 und Figur 2). Die Gitterstruktur 2 wird durch eine periodische Anordnung von im wesentlichen senkrecht zu einer Hauptfläche 3 des Trägers 1 verlaufenden Poren 4 mit im wesentlichen rundem Querschnitt gebildet. In der Gitterstruktur 2 gibt es einen Defektbereich 5, in dem das periodische Raster dadurch gestört ist, daß in diesem Bereich keine Poren 4 angeordnet sind. Der Defektbereich 5 weist zum Beispiel in der Breite die Ausdehnung von einer Pore 4 auf.

Die Poren 4 sind zum Beispiel in einem trigonalen Raster angeordnet. Über den Abstand benachbarter Poren 4 wird dabei der Wellenlängenbereich des Lichtes eingestellt, für das im Defektbereich 5 eine Wellenführung auftritt. Für den Abstand der Mittelpunkte benachbarter Poren a und die Wellenlänge λ gilt dabei allgemein die Beziehung α/λ ≈ 0,2*bis*0,5. Durch entsprechende Anordnung der Poren im Raster ist die Wellenlänge des geführten Lichtes über den gesamten Wellenlängenbereich verschiebbar, in dem das Material des Trägers 1 nicht absorbiert. In dem Beispiel, daß der Träger 1 aus Silizium besteht heißt das, daß eine Wellenführung im Wellenlängenbereich zwischen 1,1 µm und 100 µm sicher eingestellt werden kann. Zur Wellenführung im Wellenlängenbereich von 5 bis 6 µm beträgt der Abstand benachbarter Poren 4 a = 1,5 µm bis 2,5 µm.

In einem ersten Bereich 6, der sich von der Hauptfläche 3 bis in den Träger 1 hineinerstreckt, weisen die Poren 4 einen Durchmesser von zum Beispiel 2,2 µm auf bei einem Abstand zwischen benachbarten Poren 4 von a = 2,3 µm. In einem zweiten Bereich 7, der unterhalb des ersten Bereiches 6 angeordnet ist, weisen die Poren 4 einen geringeren Durchmesser als im ersten Bereich 6 von zum Beispiel 2,0 µm auf. In einem dritten Bereich 8, der unterhalb des zweiten Bereichs 7 angeordnet ist, weisen die Poren 4 einen größeren Durchmesser als im zweiten Bereich 7 auf von zum Beispiel 2,2 µm. Die Poren 4 weisen über ihre Tiefe einen nicht konstanten Durchmesser auf, so daß im zweiten Bereich 7 eine Einschnürung der Poren 4 auftritt.

Diese Einschnürung der Poren 4 bewirkt, daß im zweiten Bereich 7 mehr Silizium vorhanden ist als im ersten Bereich 6 oder im dritten Bereich 8. Der zweite Bereich 7 stellt daher im Vergleich zum ersten Bereich 6 und zum dritten Bereich 8 ein dichteres Medium dar.

Licht einer Wellenlänge λ, die in der photonischen Bandlücke der Gitterstruktur 2 liegt, wird in der Ebene senkrecht zur Hauptfläche 3 dadurch geführt, daß es sich aufgrund der photonischen Bandlücke in der Gitterstruktur 2 nicht ausbreiten kann. In der Richtung senkrecht dazu wird dieses Licht durch Totalreflexion an den Grenzflächen des zweiten Bereichs 7 zum ersten Bereich 6 bzw. dritten Bereich 8 geführt. Der Schnittbereich aus dem Defektbereich 5 und dem zweiten Bereich 7 wirkt als Lichtleiter.

Zur Herstellung der optischen Struktur werden in der Hauptfläche 3 des Trägers 1, der einen spezifischen Widerstand von zum Beispiel 1 Ωcm aufweist, Vertiefungen erzeugt, die entsprechend den Poren 4 in einem periodischen Raster angeordnet sind. Im Bereich des Defektbereichs 5 werden keine Vertiefungen erzeugt.

Die Vertiefungen werden zum Beispiel nach Herstellung einer Photolackmaske mit Hilfe konventioneller Photolithographie und anschließender alkalischer Ätzung hergestellt.

Nach Entfernung der Photolackmaske wird die Hauptfläche 3 des Trägers 1 mit einem fluoridhaltigen, sauren Elektrolyten in Kontakt gebracht. Der Elektrolyt weist eine Flußsäurekonzentration von 1 bis 50 Gewichtsprozent, vorzugsweise 3 Gewichtsprozent auf. Dem Elektrolyten kann ein Oxidationsmittel, zum Beispiel Wasserstoffsuperoxid, zugesetzt werden, um die Entwicklung von Wasserstoffbläschen auf der Hauptfläche 3 des Trägers 1 zu unterdrücken.

Der Träger 1 wird als Anode verschaltet. Zwischen dem Träger 1 und dem Elektrolyten wird eine Spannung von 0 bis 20 Volt, vorzugsweise 3 Volt, angelegt. Der Träger 1 wird von einer der Hauptfläche 3 gegenüberliegenden Rückseite her mit Licht beleuchtet, so daß eine Stromdichte von zum Beispiel 18 mA/cm² eingestellt wird. Ausgehend von den Vertiefungen werden bei der elektrochemischen Ätzung die Poren 4 erzeugt, die senkrecht zur Hauptfläche 3 verlaufen.

Nach einer Ätzzeit von zum Beispiel 10 Minuten, während der die Stromdichte konstant auf dem ersten Wert von 18 mA/cm² eingestellt war, erreichen die Poren eine Tiefe von zum Beispiel 10 µm. Dann wird die Stromdichte auf einen zweiten Wert von zum Beispiel 14 mA/cm² reduziert und die elektrochemische Ätzung mit diesem Wert fortgesetzt. Dabei wachsen die Poren 4 mit verringertem Durchmesser weiter. Der zweite Bereich 7 der Poren 4 wird gebildet. Nach einer Ätzzeit von zum Beispiel 5 Minuten weist der zweite Bereich 7 der Poren 4 eine Abmessung senkrecht zur Hauptfläche 3 von zum Beispiel 5 µm auf. Danach wird die Stromdichte auf einen dritten Wert von zum Beispiel 18 mA/cm² erhöht und die elektrochemische Ätzung fortgesetzt. Dabei entsteht der dritte Bereich 8 der Poren 4, in dem der Durchmesser der Poren 4 größer als im zweiten Bereich 7 der Poren 4 ist. Nach einer Ätzzeit von zum Beispiel 10 Minuten weist der dritte Bereich 8 eine Ausdehnung senkrecht zur Hauptfläche 3 von zum Beispiel 10 µm auf. Damit ist die optische Struktur fertiggstellt.

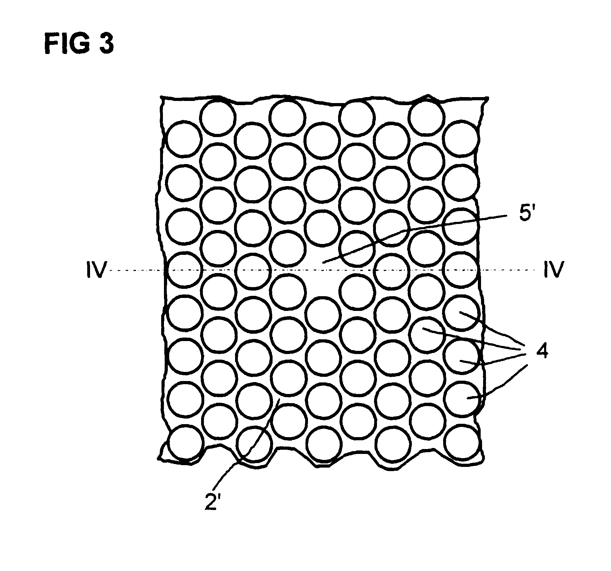

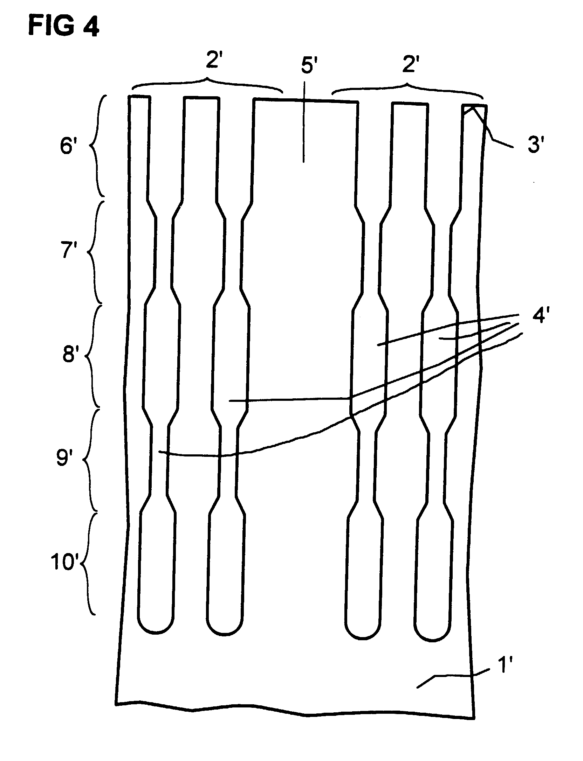

In einem Träger 1', der wie der Träger 1 aus n-dotiertem, monokristallinem Silizium besteht, ist eine periodische Gitterstruktur 2' vorgesehen. Die periodische Gitterstruktur 2' weist eine photonische Bandlücke auf für Licht der Wellenlänge λ. Die Gitterstruktur 2' wird durch in einer Hauptfläche 3' des Trägers 1' gebildete Poren 4' erzeugt (siehe Figur 3 und Figur 4).

Die Mittelpunkte der Poren 4' sind in einem periodischen, trigonalen Raster angeordnet. Der Abstand a benachbarter Mittelpunkte der Poren 4' genügt dabei der Bedingung α/λ ≈ 0,2*bis*0,5. Wegen dieser Abmessung weist die Gitterstruktur 2' für Licht der Wellenlänge λ eine photonische Bandlücke auf. Dabei ist zum Beispiel a = 2,3 µm und λ = 5 µm.

In der Gitterstruktur 2' ist ein Defektbereich 5' vorgesehen, in dem das periodische Raster dadurch gestört ist, daß eine Pore 4 fehlt. Licht der Wellenlänge λ kann sich in dem Defektbereich 5 parallel zur Hauptfläche 3' nicht ausbreiten, da die Ausbreitung des Lichtes der Wellenlänge λ wegen der photonischen Bandlücke der umgebenden Gitterstruktur 5' in der Gitterstruktur 2' nicht möglich ist.

Die Poren 4' weisen über ihre Tiefe einen nicht konstanten Durchmesser auf. In einem ersten Bereich 6', der an die Hauptfläche 3' angrenzt, weisen die Poren einen Durchmesser von zum Beispiel 2,2 µm auf. In einem zweiten Bereich 7', dere unterhalb des ersten Bereichs 6' angeordnet ist, weisen die Poren einen kleineren Durchmesser von zum Beispiel 2,0 µm auf. In einem dritten Bereich 8', der unterhalb des zweiten Bereichs 7' angeordnet ist, weisen die Poren einen Durchmesser von zum Beispiel 2,2 µm auf. In einem vierten Bereich 9', der unterhalb des dritten Bereichs 8' angeordnet ist, weisen die Poren einen kleineren Durchmesser von zum Beispiel 2,0 µm auf. In einem fünften Bereich 10', der unterhalb des vierten Bereichs 4' angeordnet ist, weisen die Poren einen Durchmesser von zum Beispiel 2,2 µm auf. Die Tiefe des ersten Bereichs 6' beträgt dabei zum Beispiel 10 µm, des zweiten Bereichs 7' 5 µm, des dritten Bereichs 8' 20 µm, des vierten Bereichs 9' 5 µm und des fünften Bereichs 10 10 µm.

Der Querschnitt der Poren 4' weist im zweiten Bereich 7' und im vierten Bereich 9' jeweils eine Einschnürung auf. Damit ist sowohl im zweiten Bereich 7' als auch im vierten Bereich 9' mehr Silizium vorhanden als in dem angrenzenden ersten Bereich 6', dritten Bereich 8' bzw. fünften Bereich 10'. Der zweite Bereich 7' und der vierte Bereich 9' stellen daher ein optisch dichteres Medium dar als die jeweils angrenzenden Bereiche 6', 8', 10'.

Licht der Wellenlänge λ, das in dem Defektbereich 5' in der Ausdehnung parallel zur Hauptfläche 3' durch die umgebende Gitterstruktur 2' in seiner Ausbreitung behindert ist, wird in der Richtung senkrecht zur Hauptfläche 3' durch Totalreflexion an der Grenzfläche zum optisch dünneren Medium im zweiten Bereich 7' bzw. vierten Bereich 9' gehalten. Der Schnittbereich zwischen dem Defektbereich 5' und dem zweiten Bereich 7' sowie zwischen dem Defektbereich 5' und dem vierten Bereich 9' stellt jeweils eine Kavität dar.

Die Herstellung der optischen Struktur, die anhand von Figur 3 und Figur 4 erläutert wurde, erfolgt analog der Herstellung der optischen Struktur, die anhand von Figur 1 und Figur 2 erläutert wurde, durch elektrochemische Ätzung. Zur Bildung des vierten Bereich 9' und des fünften Bereichs 10' der Poren 4' wird dabei die elektrochemische Ätzung weiter fortgesetzt, wobei zur Ätzung des vierten Bereichs 9' die Stromdichte auf den zweiten Wert, der zur Ätzung des zweiten Bereichs 7' verwendet wurde und zur Ätzung des fünften Bereichs 10' die Stromdichte auf den dritten Wert, der zur Ätzung des dritten Bereichs 8 verwendet wurde, eingestellt wird.

Die Erfindung läßt sich analog auf optische Strukturen übertragen, bei denen mehr als zwei Lichtleiter oder Kavitäten übereinander angeordnet sind. Dazu wird die Anzahl der Einschnürungen der Poren entsprechend vergrößert.

## Patentansprüche

1. Optische Struktur,
- bei der in einem Träger (1) eine Gitterstruktur (2) vorgesehen ist,
- bei der die Gitterstruktur (2) die Eigenschaft hat, daß es mindestens ein Frequenzband gibt, so daß sich Licht mit einer Frequenz aus dem Frequenzband in der Gitterstruktur (2) nicht ausbreiten kann,
- bei der die Gitterstruktur (2) durch eine Anordnung von im wesentlichen senkrecht zu einer Hauptfläche (3) des Trägers (1) verlaufenden Poren (4) gebildet wird,
- bei der in der Gitterstruktur (2) ein Defektbereich (5) vorgesehen ist,
- bei der die Poren (4) außerhalb des Defektsbereichs (5) in einem periodischen Raster angeordnet sind und bei der das periodische Raster in dem Defektbereich (5) gestört ist,
dadurch gekennzeichnet, daß
- mindestens drei übereinander angeordnete, im wesentlichen parallel zur Hauptfläche (3) ausgerichtete Bereiche (6, 7, 8) vorgesehen sind, wobei der Durchmesser der Poren (4) in einem zweiten Bereich (7) kleiner ist als in einem ersten Bereich (6) und einem dritten Bereich (8) und wobei der zweite Bereich (7) zwischen dem ersten Bereich (6) und dem dritten Bereich (8) angeordnet ist.

2. Optische Struktur nach Anspruch 1,
bei der der Defektbereich (5) die Gitterstruktur (2) im Bereich der Hauptfläche (3) in mindestens zwei Teile unterteilt.

3. Optische Struktur nach Anspruch 1 oder 2,
bei der unterhalb des dritten Bereichs (8) mindestens ein weiterer Bereich (9') vorgesehen ist, in dem der Porendurchmesser geringer ist als oberhalb und unterhalb des weiteren Bereichs (9').

4. Optische Struktur nach einem der Ansprüche 1 bis 3, bei der der Träger (1) aus Silizium besteht.

5. Optische Struktur nach Anspruch 4,
- bei der der Abstand der Mittelpunkte benachbarter Poren (4) im Bereich zwischen 0,5 µm und 25 µm liegt,
- bei der der Durchmesser der Poren im zweiten Bereich im Bereich zwischen 0,4 µm und 23 µm liegt,
- bei der der Durchmesser der Poren im ersten Bereich und im dritten Bereich im Bereich zwischen 0,45 µm und 24,5 µm liegt,
- bei der die Ausdehnung des zweiten Bereichs senkrecht zur Hauptfläche (3) zwischen 1 µm und 50 µm liegt.

6. Optische Struktur nach einem der Ansprüche 1 bis 5, bei der das Raster trigonal ist.

7. Verfahren zur Herstellung einer optischen Struktur,
- bei dem in einer Hauptfläche (3) eines n-dotierten Siliziumsubstrates (1) in einem periodischen Raster angeordnete Vertiefungen erzeugt werden,
- bei dem durch eine elektrochemische Ätzung in einem Elektrolyten, mit dem die Hauptfläche (3) in Kontakt steht, gegenüber dem das Siliziumsubstrat (1) als Anode verschaltet ist und in dem eine den Ätzabtrag beeinflussende Stromdichte eingestellt ist, in dem Siliziumsubstrat (1) ausgehend von den Vertiefungen Poren (4) geätzt werden, und wobei die Poren (4) eine Gitterstruktur (2) bilden, die die Eigenschaft hat, daß es mindestens ein Frequenzband gibt, so daß sich Licht mit einer Frequenz aus dem Frequenzband in der Gitterstruktur (2) nicht ausbreiten kann,
dadurch gekennzeichnet, daß
- das Raster einen Defektbereich (5) aufweist, in dem das periodische Raster gestört ist, und daß
- die elektrochemische Ätzung in mindestens drei Ätzschritten erfolgt, wobei in einem ersten Ätzschritt mit einem ersten Wert für die Stromdichte geätzt wird, in einem zweiten Ätzschritt mit einem zweiten Wert für die Stromdichte, der geringer als der erste Wert ist, geätzt wird und in einem dritten Ätzschritt mit einem dritten Wert für die Stromdichte, der größer als der zweite Wert ist, geätzt wird.

8. Verfahren nach Anspruch 7,
bei dem die Stromdichte durch Beleuchtung einer der Hauptfläche (3) gegenüberliegenden Rückseite des Siliziumsubstrats (1) eingestellt wird.

9. Verfahren nach Anspruch 7 oder 8,
- bei dem das Siliziumsubstrat (1) <100>-Scheibe ist,
- bei dem das elektrochemische Ätzen in einem fluoridhaltigen sauren Elektrolyten erfolgt.

10. Verfahren nach einem der Ansprüche 7 bis 9,
bei dem die Vertiefungen in der Hauptfläche (3) durch Herstellung einer Photolackmaske auf der Hauptfläche (3) und anschließende alkalische Ätzung der Hauptfläche (3) erzeugt werden.

## Claims

1. Optical structure,
- in which a lattice structure (2) is provided in a carrier (1),
- in which the lattice structure (2) has the property that there is at least one frequency band such that light at a frequency from the frequency band cannot propagate in the lattice structure (2),
- in which the lattice structure (2) is formed by an arrangement of pores (4) which run essentially perpendicular to a main surface (3) of the carrier (1),
- in which a defect region (5) is provided in the lattice structure (2),
- in which the pores (4) are arranged in a periodic grid pattern outside the defect region (5), and in which the periodic grid pattern is disturbed in the defect region (5),
characterized in that
- at least three regions (6, 7, 8) arranged one above the other and aligned essentially parallel to the main surface (3) are provided, the diameter of the pores (4) being smaller in a second region (7) than in a first region (6) and a third region (8), and the second region (7) being arranged between the first region (6) and the third region (8).

2. Optical structure according to Claim 1,
in which the defect region (5) subdivides the lattice structure (2) into at least two parts in the region of the main surface (3).

3. Optical structure according to Claim 1 or 2, in which at least one further region (9') is provided underneath the third region (8), in which further region the pore diameter is smaller than it is above and below the further region (9').

4. Optical structure according to one of Claims 1 to 3,
in which the carrier (1) is composed of silicon.

5. Optical structure according to Claim 4,
- in which the distance between the centre points of neighbouring pores (4) lies in the range between 0.5 µm and 25 µm,
- in which the diameter of the pores in the second region lies in the range between 0.4 µm and 23 µm,
- in which the diameter of the pores in the first region and in the third region lies in the range between 0.45 µm and 24.5 µm,
- in which the extent of the second region perpendicular to the main surface (3) is between 1µm and 50 µm.

6. Optical structure according to one of Claims 1 to 5,
in which the grid pattern is trigonal.

7. Method for producing an optical structure,
- in which depressions arranged in a periodic grid pattern are produced in a main surface (3) of an n-doped silicon substrate (1),
- the grid pattern has a defect region (5) in which the periodic grid pattern is disturbed, and in that
- in which pores (4) are etched in the silicon substrate (1), starting from the depressions, by means of electrochemical etching in an electrolyte with which the main surface (3) is in contact, opposite which the silicon substrate (1) is connected up as an anode and in which a current density which influences the etching erosion is set, and where the pores (4) form a lattice structure (2) which has the property that there is at least one frequency band such that light at a frequency from the frequency band cannot propagate in the lattice structure (2),
characterized in that
- the grid pattern has a defect region (5) in which the periodic grid pattern is disturbed, and in that the electrochemical etching is carried out in at least three etching steps, etching being carried out with a first value for the current density in a first etching step, etching being carried out with a second value for the current density, which is smaller than the first value, in a second etching step and etching being carried out with a third value for the current density, which is larger than the second value, in a third etching step.

8. Method according to Claim 7,
in which the current density is set by illuminating a rear side, opposite to the main surface (3), of the silicon substrate (1).

9. Method according to Claim 7 or 8,
- in which the silicon substrate (1) is a <100> wafer,
- in which the electrochemical etching is carried out in a fluoride-containing, acidic electrolyte.

10. Method according to one of Claims 7 to 9, in which the depressions in the main surface (3) are produced by producing a photoresist mask on the main surface (3) and subsequently carrying out alkaline etching of the main surface (3).

## Revendications

1. Structure optique,
- dans laquelle une structure de grille (2) est prévue dans un support (1),
- dans laquelle la structure de grille (2) a la propriété suivante, à savoir qu'il existe au moins une bande de fréquence telle que de la lumière d'une fréquence de la bande de fréquence ne puisse pas se propager dans la structure de grille (2),
- dans laquelle la structure de grille (2) est formée par un agencement de pores (4) s'étendant sensiblement perpendiculairement à une surface principale (3) du support (1),
- dans laquelle il est prévue une zone de lacune (5) dans la structure de grille (2),
- dans laquelle les pores (4) en-dehors de la zone de lacune (5) sont disposés selon un réseau périodique et dans laquelle le réseau périodique est perturbé dans la zone de lacune (5),
**caractérisée** en ce que sont prévues au moins trois zones (6, 7, 8) superposées, orientées sensiblement de manière parallèle à la surface principale (3), le diamètre des pores (4) étant, dans une deuxième zone (7), inférieur à celui dans une première zone (6) et dans une troisième zone (8), et la deuxième zone (7) étant disposée entre la première zone (6) et la troisième zone (8).

2. Structure optique selon la revendication 1, dans laquelle la zone de lacune (5) subdivise la structure de grille (2), dans la zone de la surface principale (3), en au moins deux parties.

3. Structure optique selon la revendication 1 ou 2, dans laquelle sous la troisième zone (8) est prévue au moins une autre zone (9') dans laquelle le diamètre de pore est plus petit qu'au-dessus et en-dessous de ladite autre zone (9').

4. Structure optique selon l'une des revendications 1 à 3, dans laquelle le support (1) est en silicium.

5. Structure optique selon la revendication 1,
- dans laquelle la distance entre les centres de pores (4) voisins, se situe dans une plage entre 0,5 µm et 25 µm,
- dans laquelle le diamètre des pores dans la deuxième zone se situe dans une plage entre 0,4 µm et 23 µm,
- dans laquelle le diamètre des pores dans la première zone et dans la troisième zone se situe dans une plage entre 0,45 µm et 24,5 µm,
- dans laquelle l'étendue de la deuxième zone, perpendiculairement à la surface principale (3) se situe entre 1 µm et 50 µm.

6. Structure optique selon l'une des revendications 1 à 5, dans laquelle le réseau est trigone.

7. Procédé de fabrication d'une structure
- selon lequel on engendre dans une surface principale (3) d'un substrat de silicium (1) dopé n, des creux disposés selon un réseau périodique,
- selon lequel on grave dans le substrat de silicium (1), des pores (4) à partir des creux, par gravure électrochimique dans un électrolyte, avec lequel est en contact la surface principale (3), par rapport auquel le substrat de silicium (1) est monté en anode, et dans lequel est établie une densité de courant influençant l'érosion de gravure, et les pores (4) formant une structure de grille (2) qui présente la propriété suivante, à savoir qu'il existe au moins une bande de fréquence telle que de la lumière d'une fréquence de la bande de fréquence ne puisse pas se propager dans la structure de grille (2),
**caractérisé** en ce que le réseau présente une zone de lacune (5) dans laquelle le réseau périodique est perturbé, et en ce que la gravure électrochimique s'effectue en au moins trois étapes de gravure, à savoir que dans une première étape de gravure, on grave avec une première valeur pour la densité de courant, que dans une deuxième étape de gravure, on grave avec une deuxième valeur pour la densité de courant, qui est inférieure à la première valeur, et que dans une troisième étape de gravure, on grave avec une troisième valeur pour la densité de courant, qui est supérieure à la deuxième valeur.

8. Procédé selon la revendication 7, selon lequel la densité de courant est réglée par éclairement d'une face arrière du substrat de silicium (1), opposée à la surface principale (3).

9. Procédé selon la revendication 7 ou 8,
- selon lequel le substrat de silicium (1) est une tranche <100>,
- selon lequel la gravure électrochimique s'effectue dans un électrolyte acide à teneur en fluorure.

10. Procédé selon l'une des revendications 7 à 9, selon lequel les creux dans la surface principale (3) sont engendrés par réalisation d'un masque de vernis photosensible sur la surface principale (3), suivie d'une gravure alcaline de la surface principale (3).
